Europäisches Patentamt

(19) European Patent Office

Office européen des brevets

(11) Publication number: **0 002 365 B1**

(12) **EUROPEAN PATENT SPECIFICATION**

(45) Date of publication of patent specification: **30.06.82**

(21) Application number: **78300700.8**

(22) Date of filing: **01.12.78**

(51) Int. Cl.³: **G 06 F 15/20, H 04 N 5/22**

(54) **System for mixing two sequences of video data.**

(30) Priority: **02.12.77 US 856680**

(43) Date of publication of application:
**13.06.79 Bulletin 79/12**

(45) Publication of the grant of the patent:
**30.06.82 Bulletin 82/26**

(84) Designated Contracting States:
**DE FR GB**

(56) References cited:
**US - A - 3 706 071**
**US - A - 4 041 527**

(73) Proprietor: **International Business Machines Corporation**
**Armonk, N.Y. 10504 (US)**

(72) Inventor: **Giddings, Gary Michael**
**6318 Benzo Drive**
**San Jose California 95123 (US)**
Inventor: **Langdon Jr., Glen George**
**6772 Hampton Drive**
**San Jose California 95120 (US)**
Inventor: **Malowany, Alfred Stephen**
**4590 Prince of Wales**
**Montreal Quebec, H45 2L3 (CA)**
Inventor: **Williams, Robin**
**6618 Bubblingwell Place**
**San Jose California 95120 (US)**

(74) Representative: **Lewis, Alan John**
**IBM United Kingdom Patent Operations Hursley Park**
**Winchester, Hants, SO21 2JN (GB)**

Courier Press, Leamington Spa, England.

System for mixing two sequences of video data

A wide variety of systems are now known for combining two video images into a single display. Perhaps best known of these are the analoque systems in which special rasters may be generated, one picture may be superimposed on another, and differently generated images may be combined, or clearly distinguished. The functions usually performed, however, are essentially straightforward in character, such as the generation of split images, the superimposition of an individual against a background, and the display of a character message in a contracting colour against a changing video background. A number of systems are also known and in use for generating pseudocolour displays for digitally generated messages and graphical displays, either under software control or as shown in US. Patent No. 3,911,418.

With the continued development and enhancement of the capabilities of digital graphical display systems, however, such techniques do not enable full realisation of the potential of a display, in terms of making the data readily and fully comprehensible to a viewer. For example, a modern data processing system can generate a simulated three-dimensional display of a building, vehicle or other structure, and show the structure as viewed from different angles. However, when the display itself is restricted to lines of one colour and one intensity against a contrasting background of uniform colour and intensity, the observer must himself visualize relationships in order to interpret the display, because no gradations, shadings or interactive effects can be incorporated. As is evident when one looks at a map in which different colours and intensity variations have been used to depict elevation gradients, vegetation and contrasting geographical features, significant features and relationships are much more readily discerned than in a monochromatic version of the same map. As another example, engineers and scientists now employ processors in conjunction with interactive display systems in a wide variety of design and analytical studies, in seeking to analyse the effect of different variables and parameters in a computer model of a system or device. A full colour display which is capable of a wide range of subtle presentations of different images will be much more readily comprehensible than the typical trace display on a non-illuminated background, or line display on a colour background.

Some workers in the art have made attempts at providing a greater degree of versatility, as evidenced by Eiselen in U.S. Patent No. 3,976,982 and Gilbert et al in *IEEE Transactions on Computers,* November 1976, pp. 1089—1100. In the system of U.S. Patent No. 3,796,982, an image from a source is combined with an image stored in an accumulating memory under the program control of an external element or control interface, in accordance with instructions which must be externally supplied to the control interface via a signal path. This is essentially a static type of control, inasmuch as the external instruction dictates that a given function will be employed until a subsequent choice is made. Thus although a number of functions may be available, only one can be used at a time for the whole image. The same general characteristic can be made of the system of the Gilbert et al publication, which moreover is limited in the number of functions that can be performed.

For very many years the picture industry used the "chroma key system" to produce *inter alia* special effects. In this system a foreground camera records a foreground object or action against a plain but strongly coloured background and produces a foreground signal. The colour backing content of this signal is then electronically removed and replaced by appropriate portions of a background signal. The background signal is produced by a background camera which records the background scene. The final picture signal therefore contains the foreground object or action against the background scene.

An improved "chroma key system" is disclosed in US. specification No. 3778542 (Hanseman). The Hanseman specification discloses apparatus which electronically senses a specific, selectable saturated colour appearing in the simultaneous red, blue and green video output signals of a television colour camera, removes from the video signals of the camera, by electronic subtraction circuitry, the saturated colour selected and, substitutes for the removed saturated colour, the red, blue and green video output signal derived from a second television colour camera.

In the Hanseman system a so-called "chroma key" signal is generated during the intervals that the selected colour is sensed and the chroma key signal is used to control a colour signal suppressor which suppresses the selected colour component from the foreground signal. The chroma key signal is also used to control a second signal suppressor which suppresses the background signal during the intervals in which the foreground signal is not suppressed.

A further improvement on the "chroma key system" is disclosed in U.S. Specification No. 4041527 (Rayner). The Rayner specification is concerned with improving the visual image obtained by adding a three-dimensional shadow effect. Rayner discloses a chroma key system in which an analog background video signal is combined with an analog foreground video signal by a conventional analog mixer circuit. The mixer circuit has three control inputs, a chroma key signal input, a special effects input and a shadow key input. The chroma key signal input is conventional and exists during the appropriate suppression/substitution intervals: the special effect input exists during intervals dedicated to special effects: and the shadow effect input exists during intervals when the composite output signal is to include shadow effects.

In the Rayner specification a conventional luminance signal Y and colour difference signals R—Y, B—Y are generated. The shadow key input signal is derived from the luminance signal Y by processing that signal to derive a signal of appropriate amplitude to modify the chroma key signal.

The Applicants have appreciated that there is a need for a system that is more versatile than the basic "chroma key system" or the improved systems disclosed in U.S. specifications No. 3778542 (Hanseman) or 4041527 (Rayner). As will be appreciated the Rayner system is inflexible and can only be used to establish a single function, that is a shadow effect.

It is therefore a prime object of the Applicants invention to provide a highly flexible system for producing a composite video signal from two input signals by combining those signals in a selected one of a multiplicity of alternative ways.

It is another object of the Applicants invention to provide such a system in which the two input signals from different picture elements can be combined in different ways.

Accordingly the invention provides a system for producing a composite video signal capable of controlling a display device to display a composite image comprising a plurality of picture elements and corresponding to two selectively superposed image sources comprising similar numbers of picture elements, said system comprising means for producing two video input signals representing the two image sources and means for deriving the composite signal from the two input signals, said deriving means including signal mixing means operable under the control of applied control signals to combine signals supplied thereto in accordance with the current control signal and means for producing control signals in accordance with the successive current values of at least one of the input signals, characterised in that said one input signal comprises a sequence of digital values respectively representing the grey scale levels of the successive picture elements of one of the source images, in that the sequence of digital values are used successively to address an addressable storage storing a multiplicity of words, one for each possible grey scale value, each word comprising a predetermined control signal and component signal and being uniquely associated with a grey level value; in that the control signal and the component signal of the addressed word are simultaneously supplied to the mixing means as the current control signal and one of the signals to be combined, and in that the other signal supplied to the mixing means comprises a synchronous sequence of digital values respectively representing characteristics of the corresponding picture elements of the other source image according to a predetermined coding.

In a preferred embodiment of the invention, each video signal sequence is generated as a sequence of multi-colour digital valued signals, accompanied by one or more data dependent control signal patterns. The two digital colour signals are then arithmetically or logically combined in real time on a pixel-by-pixel basis in accordance with a function determined at that instant by the data dependent control signal. A stream of digital values representing pixels of varying intensity in a digital raster are applied as addresses to a table look-up memory having a stored word for each address. Concurrently, an analogue video signal, such as is derived from a closed circuit TV monitor, is converted to a corresponding digital value within a grey scale the limits of which may be varied as desired. The digitised signal is then transformed by the table look-up memory into sets of digital-valued colour signals accompanied by dynamic digital control patterns that are dependent on the image data itself. These colour signals are applied along with the set of colour signals of digital origin to an arithmetic and logic unit, which may also be called a digital mixer, operating under the control of the data dependent control signals. The arithmetic and logic unit may perform for each pixel, as determined by the control signals, an adding, subtracting, blocking, averaging or other arithmetic or logic operation. This dynamic mixing of red, green and blue colours in data dependent fashion on a pixel-by-pixel basis enables the images to be presented with great subtlety and variety.

The invention will further be explained, by way of example, with reference to the drawings, in which:

Figure 1 is a block diagram of a video display system in accordance with the invention;

Figure 2 is a block diagram of a portion of an arithmetic and logic unit that may be utilised in the system of Figure 1; and

Figure 3 includes graphical representations of different visual effects that may be provided by systems in accordance with the invention.

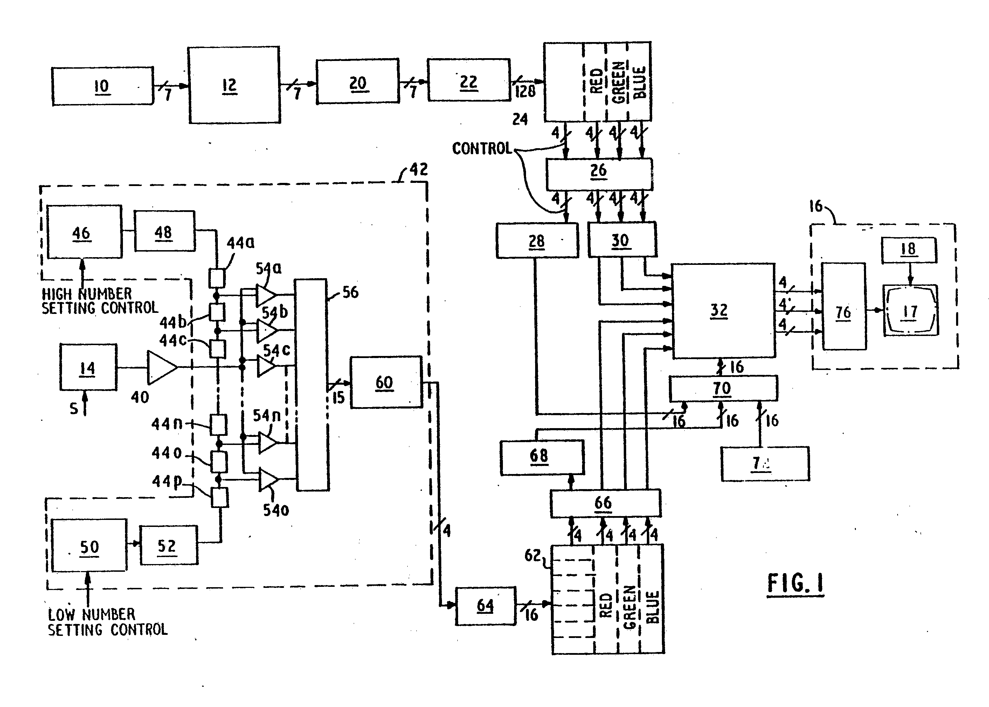

The preferred embodiment of the invention is a colour video display system for operation with two sources of image data, one of which may be a conventional digital image generator, referenced in Figure 1 as a processor 10. For descriptive purposes, a matrix memory 12 included in the system is separately shown, and comprises a 512 column×512 row matrix memory, each location storing a 7 bit pixel which is capable of representing 128 colour combinations or grey scale levels. A closed circuit TV camera 14 provides an analogue image source, while the output display is generated on a TV monitor 16 including a CRT 17 and synchronising circuits 18. The system is maintained in synchronism by conventional means which are not significant to the inventive concept and the details of which have accordingly been omitted for simplicity. The processor 10 clock may serve as the master synchronising signal reference for the timing of data transfer and for vertical and horizontal scanning purposes in the video devices. The presence of the memory 12 enables the system to effect precise synchronisation between the image signal trains. In the Figures, the use of multiple lines between functional elements is designated by the employment of a diagonal across the line accompanied by a numeral or other notation indicating the number of lines that are there represented.

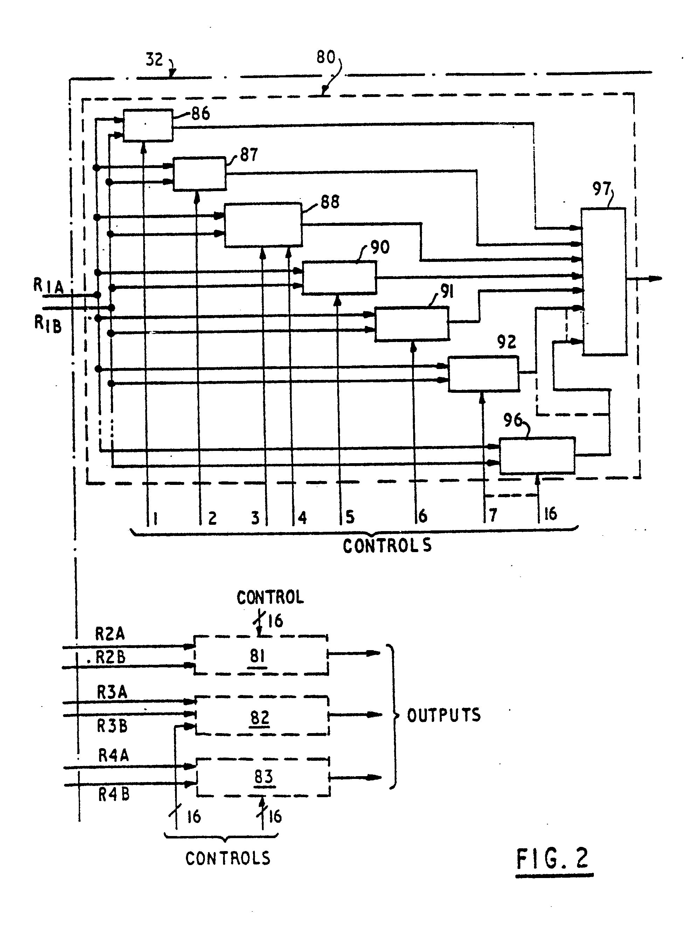

The digital image signal train is applied from the matrix memory 12 to an address register 20, the output signals (seven parallel lines) from the address register 20 being applied through a decoder 22 to a table look-up memory 24. Inasmuch as the system operates essentially in real time and data is transferred on a serial basis, read control and bit timing signals that may be applied to the different functional units have been omitted for simplicity. The output of the decoder 22 comprises 27, or a total of 128, output lines to address a corresponding number of word storage locations in the table look-up memory 24. The storage locations contain 4 bits each of red, green and blue colour data and may also include 4 bits of control data although in the present example the control data used is primarily that contained in the analogue signal channel. The table look-up memory 24 may comprise a prewired or program addressable type of storage, such as a read only memory, or a randomly addressable memory that may be destructively read but immediately rewritten. The 16 output bits from the memory 24, comprising the 12 colour bits (and the 4 control bits where these are used), are applied to an output register 26, with the 4 control bits being converted to signals on 1 of 16 output lines in a control decoder 28. The colour bits may be applied to what is here called a "digital dimmer" 30, which actually comprises a separate divider for each of the 4 bit colour signals, and which can be set to divide each signal by unity, three-fourths, one-half, or one-quarter, so as selectively to reduce the intensity of the signal. For this purpose, a "division control" input is utilised, and this may comprise either a manually selectable switch, processor control signals, or two selected bits in the control signal from the table look-up memory 24. The three sets of 4 colour input signals, with or without the optional digital dimming function, are applied to the arithmetic and logic unit 32, which unit is also referred to herein as containing digital bit mixers. The arithmetic and logic unit 32 will be described in greater detail with reference to Figure 2.

Corresponding sets of colour intensity signals are also derived in an analogue channel which includes the closed circuit TV 14, signals from which are applied through an amplifier to a video analogue digitiser 42. In the digitiser 42, a fixed number of adjustable signal amplitudes are utilised to define the grey scale range, from minimum to maximum. A chain of precision resistors 44a, 44b, 44c ... 44n, 44o, 44p are coupled to a high and low voltage source respectively. The high voltage source is selectable in level, and provided by a first digital register 46, here referred to as a "high number register", which is settable to a selected value either by switch control or by program control to represent a desired maximum voltage for the voltage divider chain of resistors 44. The output from the high number register 46 is transformed into a corresponding analogue level by a first digital-to-analogue converter 48. Similarly, the minimum potential to be established for the other end of the voltage divider chain is provided by a low number register 50 controlling an associated digital-to-analogue converter 52. By moving the maximum and minimum values further apart, the digital increments defined by the voltage divider chain are increased but a greater range is covered, while the converse may also be established. Because the absolute values of the limits may be moved up or down concurrently, both threshold values and the degree of resolution of the grey scale may be changed by the digitiser 42. Taps taken from the successive intermediate points of the voltage divider chain are applied to individual inputs of a series of comparators 54a, 54b, 54c ... 54n, 54o, comprising operational amplifiers arranged as threshold sensitive devices which give a binary output signal to indicate whether the applied signal is above or below a preselected level. The outputs of the comparators 54 are applied to a holding register 56.

The 15 comparators 54 that are coupled between the mid-points of the resistors 44 in the voltage divider chain provide inputs through the holding register 56 to a priority encode circuit 60 which provides 4 bits of parallel encoded data with, for example, 1111 representing the maximum value and all voltage levels above that value, and 0000 defining the minimum value and all voltage levels in the subband below it. These parallel signals are applied to a second table look-up memory 62 having 16 words of 16 bits each, with 4 bits each being devoted to the red, green and blue colours respectively, and 4 bits being devoted to control data. An address encoder 64 is employed to select the appropriate word. The control data groupings can be, for example, "AND", "OR", "add", "subtract", "block A", "block B", and "average" but with 4 different bits up to a total of 16 different functions are available. The table look-up function here performed provides a conversion to pseudocolour from grey scale black and white, either derived from the closed circuit TV 14 or from some other source, so that the ability to discriminate is substantially greater than with a single colour. Output signals from the memory 62 are applied through an output register 66 to the arithmetic and logic unit 32 for the 12 colour signals, and to a second control decoder 68, for the control signals. Both sets of control signals or combination bits from the decoders 28 and 68 are applied to a multiplexer 70, along with another set of signals from a mode register 72. The mode register 72, which may be manually set or operated under program control to generate functional control signals, provides the equivalent of a static or external control for the system. Whichever set, or combinations of parts of sets, of control signals is utilised under selection control at the multiplexer 70, the sixteen output lines from the multiplexer govern the functions performed within the arithmetic and logic unit 32.

The output signals from the arithmetic and logic units 32 comprise the digital, 4 bit valued, signals for red, green and blue respectively, and these are applied to intensity control circuits 76 in the TV monitor 16. The intensity control circuits 76 include digital-to-analogue converters and conventional amplification circuits for modulation of display colour intensity.

Details of the arithmetic and logic unit 32 are shown in part in Figure 2, which fragment relates only to the 16 possible control functions that may be exercised for each bit value of each colour, such as the four bits $R_1$, $R_2$, $R_3$ and $R_4$ for each channel (A & B). In Figure 2, the functions have been designated in various ways, but all represent some type of arithmetic or logic operation. The four depicted bit mixers 80, 81, 82, 83 each contain like functional gates or circuits, although only the $R_1$ bit mixer 80 is shown in some detail. Thus for the logical "AND" function, the two input signal $R_{1A}$ and $R_{1B}$ are applied to a three input AND gate 86 that also receives a control signal to effect the designated function for the same picture element. For the next picture element, the "OR" function provided by the circuit 87 may be desired, and the second control line is actuated, so that the circuit 87 responds to a signal on either input line. Similarly, EXCLUSIVE-OR and other logical functions may also be defined. Also included in this example are an add/subtract circuit 88, circuits 90 and 91 for blocking the A and B signals respectively, a circuit 92 for averaging the two signals and, by way of illustration, an arbitrary function designated simply as "function 16". Where full addition, subtraction or averaging of each 4 bit value with a corresponding 4 bit colour value is to be effected, conventional circuits providing carry between adder stages will be desired. Where the blocking signal function is employed, the corresponding input signal is simply gated off. Although the circuits are separately shown for ease of understanding, it will be apparent that these and many other functions could be established by a microprogram and that where hard wired circuits are to be used conventional logical design would substantially reduce the number of gating elements utilised.

The operation of the system may perhaps best be visualised initially in terms of the concurrent generation of two colour images, each consisting of an array of distributed pixels derived from a sequence of coded bit-valued representations. The 7 bit digital characters from the processor 10 provide extremely finely resolved grey scale values which are used to address a corresponding word location in the table look-up memory 24. The chosen word location contains three different digitised colour values, each 4 bits long, and may also contain the control or combinational bits, although others are used in this particular example. The output from the table look-up memory 24 is provided essentially in real time and represents the pseudocolour conversion of the input. Great variety is possible because of the number of words available in this memory, which permits essentially all colours, including white, to be generated, and with a wide range of intensities.

Concurrently, the analogue signal from the CCTV source 14 is converted into digital grey scale values at the comparators 54, in relation to increments within a range established by the high and low number registers 46, 50 respectively. Although a lower number of grey scale values is available (in this example) the ability to shift limits and adjust increments within the limits enables the contrast and intensity of the analogue input to be altered to best advantage. When this input is converted to pseudocolour in the associated table look-up memory 62, it is read out concurrently with the accompanying control bit patterns in a coded sequence, and again in essentially real time fashion. Both digital coded sequences of colour values for a pixel are then combined in dynamic dependence on the control signal pattern for the same pixel, within the arithmetic and logic unit 32. Although the analogue channel is used for data dependent control in this example, the groups of combination bits taken from the other image input, or static control bits may be taken from the mode register 72, as selected at the multiplexer 70.

Substantial advantages for video display systems are realised from the real time digitising and generation of colour-valued signals which are then dynamically combined in a data dependent manner. The use of a table look-up memory in each image signal path transforms each image to a more readily interpreted form, even if the type of control remains static (e.g. if the whole images merely are combined in additive fashion). The ability of the video analogue signal digitiser to alter the range and resolution of the grey scale permits selective modification of the video input for advantageous display purposes but is not essential to the invention. However various advantages are derived, because low level backgrounds may be eliminated, or the contrast in a scene having low level illumination may be substantially enhanced.

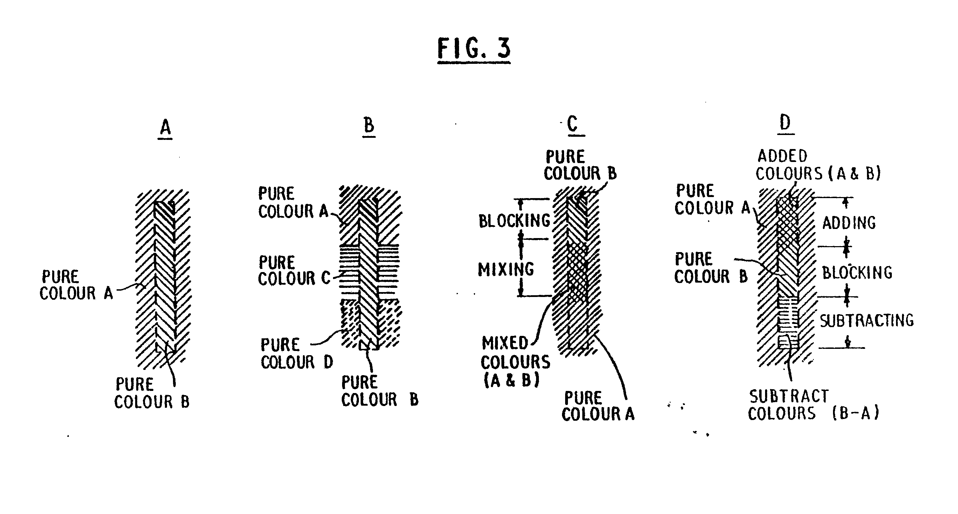

It is more significant, however, the dynamic control on a pixel-by-pixel basis enables different parts of an image to be coloured in advantageous and different ways depending on data content and relationships. Referring to part A of Figure 3 which represents a relatively simple condition, it may be seen that a background of a pure colour A is to be viewed except where a pure colour B from the other input exceeds a minimal level. Thus, as shown, in writing colour B there is no mixing with colour A, and the region of colour B can be of varying intensity (as can the region of colour A, although this is not shown). Consequently a line drawn in colour B (e.g. red) appears to cut through the background of colour A (e.g. green) and no colour mixing results. Of course, the "pure" colours need not be a primary red, green or blue, but can be any appropriate colour of the spectrum including white. Part A thus represents a blocking function, and could be accompanied by concurrent conversion of pure colour B to a maximum level wherever it is to be written.

Part B of Figure 3 shows that the blocking function can be independent of background, in that the varying intensity region of colour B can be written without colour mixing against a background of colours A, C and D generated during the pseudocolour transformation. Because of the dynamic control of increments of picture area, further variations may be introduced, based upon the intensity of one or the other of the images. Thus as seen in part C, where colour A is of less than a certain threshold intensity, pure colour B may be superimposed on a background of colour A by blocking colour A. At or above the chosen threshold for colour A, the colours may be mixed (additively or subtractively) to give a different effect. As an extension of this capability, adding, blocking and subtracting functions can be used at different regions all dependent upon the intensity level of the signal in the channel corresponding to colour A, as shown in part D.

A typical specific example of how signals may variably be combined based upon the data content in the signals themselves involves the display of digitally generated characters and vectors on a map reference which may be derived from a closed circuit TV monitor. Lines and patterns of varying intensity are generated by the digital source but for best comprehension of the display it is not suitable simply additively to combine the signals. This would result in the lines having both different intensities and varying colours along their lengths. It is also not satisfactory for all purposes simply to block one of the signals so as to permit the lines to stand out more clearly, because there can be significant variations in the digital input. It may be desired to show only the highest intensity lines, and to leave the map image at its appropriate intensity where lines are not to be shown. In accordance with the invention these and other functions can be performed automatically and in real time.

Example I

In order to provide a display in which characters and vectors generated in the digital channel starting with the processor 10 are uniquely presented relative to an analogue image starting with the CCTV 14, a prearranged combination of control bits and colour bit values is entered into the video look-up table 62 and the video analogue signal digitiser 42 is set to appropriate maximum and minimum values. It is assumed that a pseudocolour analogue display of three different colours is to be generated and that the digitally generated images will be arithmetically combined in each of the separate colour regions. Thus, the entry into the video look-up table 62 may employ the "add" function and provide a red colour output in the address range of 0 to 5, may employ the green colour output and the "subtract" control function in the address range of 6 to 10, and the blue colour output together with the "add" control function for addresses from 11 to 15. Concurrently, the digital input is converted to a single colour, or to a number of colours in a prearranged format in the video lookup table 24. As the analogue signals are digitised, a pseudocolour output is generated consisting of the three selected colours in different areas. These areas are overwritten by the digitally generated patterns in different colours. Consequently, outstanding or significant features can readily be identified against the background.

Example II

In this example and in Example III, it is assumed that the control bits are included in the video look-up table 24 in the digital channel instead of the video look-up table 62 in the analogue channel. In this example, it is desired to provide sharply visible digitally generated characters and vectors against the analogue pseudocolour image background. If the digital signal is divided into eight principal increments (0 to 7) and it is desired to display the digital signal clearly whenever the digital value is at increment levels 6 and 7, then the entries in the video look-up table 24 are written as follows:

A. Addresses 0 to 5 contain:
   1. Control bit section—"Block the digital input"
   2. Colour bits—arbitrary, because to be blocked.

B. Addresses 6 and 7 contain:
   1. Control bit section—"Block the analogue input"
   2. Colour bits—establish maximum (e.g.
      1111 level).

Consequently, the pseudocolour image of the map will appear at its normal intensity except where the digital lines are sufficiently bright, at which regions the digital lines will appear in full brightness, without colour mixing with the pattern of the map. Furthermore, the map display is generated throughout in pseudocolour in accordance with any rule that is established and entered into the second video look-up table 62. Obviously the options of having the map only in graduated tones of one colour and having the superimposed digitally generated line patterns in one colour, or in different colours, are readily available.

Example III

Consider another situation in which the analogue signal has been converted to three colour signals, red, green and blue, each with intensity values of 0 to 15. The digital signal initially has intensity values of 0 to 127, but is applied to the table look-up memory 24 so as to generate a pseudocolour signal of corresponding intensity variations, but in three different colours, each scaled from 0—15. However, in this situation it is desired that when the grey scale intensity value of the digital signal is in excess of level 10 (or 11—15), then the digital pseudocolour signal will override the analogue signal, which be blocked out, but otherwise the two signals will be summed and divided by two (averaged). For these purposes, the control bit entries in the video look-up table memory 24 are set as follows:

A. Addresses 0 to 10—average the two inputs
B. Addresses 11 to 15—block the analogue input

Under these circumstances, if the pseudocolour output for the digital input is green for all addresses, then green lines will show on the screen for signal levels of digital input in the 11—15 range. However, for signal levels from the digital input of 1—10, mixtures of the green digital input and the analogue signal input, whatever colour it is, will appear on the screen. Thus wherever the analogue signal is red, weaker green lines drawn on top will appear to be yellowish or orange in colour. Thus, depending on the input signal levels, one pattern can be seen through the other.

**Claims**

1. A system for producing a composite video signal capable of controlling a display device to display a composite image comprising a plurality of picture elements and corresponding to two selectively superposed image sources comprising similar numbers of picture elements, said system comprising means (10, 14) for producing two video input signals representing the two image sources and means for deriving the composite signal from the two input signals, said deriving means including signal mixing means (32) operable under the control of applied control signals to combine signal supplied thereto in accordance with the current control signal and means for producing control signals in accordance with the successive current values of at least one of the input signals, characterised in that said one input signal comprises a sequence of digital values respectively representing the grey scale levels of the successive picture elements of one of the source images, in that the sequence of digital values are used successively to address an addressable storage (62) storing a multiplicity of words, one for each possible grey scale value, each word comprising a predetermined control signal and component signal and being uniquely associated with a grey level value; in that the control signal and the component signal of the addressed word are simultaneously supplied to the mixing means as the current control signal and one of the signals to be combined, and in that the other signal supplied to the mixing means (32) comprises a synchronous sequence of digital values respectively representing characteristics of the corresponding picture elements of the other source image according to a predetermined coding.

2. A system as claimed in claim 1, further characterised in that each component signal comprises a digital colour video signal whereby a pseudo colour display is obtained.

3. A system as claimed in claim 1 or 2, further characterised in that said one input signal is derived from the analog luminance output of a television camera by a digitising circuit capable of forming the discrete grey code values.

4. A system as claimed in claim 1, 2 or 3, further characterised in that the other input signal comprises a second sequence of digital values respectively representing characteristics of picture elements of the other source image, which second sequence of digital values are used successively to address addressable storage 24 storing a multiplicity of words, one for each possible value of the characteristic, each word comprising a component signal uniquely associated with a characteristic value, and the component signal of the addressed word being supplied to the mixing means, 32 as the aforesaid other signal supplied thereto.

5. A system as claimed in claim 4, further characterised in that at least some of the stored characteristic words also comprise a control signal and in that means 70 are provided for combining the control signals associated with two component signals to be mixed to provide a composite control signal.

## Patentansprüche

1. Zwei wahlweise überlagerten Bildquellen zumindest ziemlich gleicher Bildelementanzahl entsprechendes System zum Erzeugen einer zur Steuerung einer Anzeigevorrichtung geeigneten Bildaustastsynchron-Signals, um ein eine Vielzahl von Bildelementen aufweisendes, gemischtes Bild zur Anzeige zu bringen, mit im besagten System enthaltenen Maßnahmen (10, 14) sowohl zum Erzeugen zweier, die beiden Bildquellen wiedergebenden Eingangs-Bildsignalgemische als auch zum Abtrennen des Bildaustastsynchron-Signals von beiden Eingangssignalen, wobei die Abtrennmaßnahmen einen unter Steuerung durch angelegte Steuersignale zu betreibenden Signalmischer (32) aufweisen, um daran zugeführtes Signal in Einklang mit dem Stromsteuersignal zu mischen, und mit Maßnahmen zum Erzeugen von Steuersignalen im Ansprechen auf aufeinanderfolgende Stromwerte von zumindest einem der Eingangssignale, dadurch gekennzeichnet, daß das besagte eine Eingangssignal eine Folge von Digitalwerten enthält, die diesbezüglich die Graustufungen aufeinanderfolgender Bildelemente von einem der Quellenbilder darstellen, daß die Folge von Digitalwerten dazu dient, nacheinander einen adressierbaren Speicher (62) zu adressieren, der eine Vielzahl von Worten, nämlich eins für jede mögliche Graustufung, speichert, wobei jedes Wort sowohl ein vorbestimmtes Steuersignal als auch ein Komponentensignal enthält und eindeutig einer Graustufung zugeordnet ist, daß das Steuersignal und das Komponentensignal des adressierten Wortes gleichzeitig dem Signalmischer als Stromsteuersignal und eins der zu mischenden Signale zugeführt wird und daß das dem Signalmischer (32) zugeführte andere Signal eine synchrone Folge von Digitalwerten umfaßt, die jeweils entsprechend einer vorgebbaren Codierung Charakteristiken entsprechender Bildelemente des anderen Quellenbildes darstellen.

2. System, wie in Anspruch 1 beansprucht, weiterhin dadurch gekennzeichnet, daß jedes Komponentensignal ein digitales Farbvideosignal enthält, womit sich eine Pseudo-Farbanzeige ergibt.

3. System, wie in Anspruch 1 oder 2 beansprucht, weiterhin dadurch gekennzeichnet, daß das besagte eine Eingangssignal dem Leuchtdichte-Analogausgang einer Fernsehkamer über einen Analog-Digitalumsetzer entnommen wird, der zur Bildung diskreter Graustufenwerte ausgelegt ist.

4. System, wie in Anspruch 1, 2 oder 3 beansprucht weiterhin, dadurch gekennzeichnet, daß das andere Eingangssignal eine zweite Folge von Digitalwerten enthält, die jeweils Charakteristiken von Bildelementen des anderen Quellenbildes darstellen, wobei die zweite Ditigalwertfolge dazu dient, aufeinanderfolgend den adressierbaren Speicher (24) zu adressieren, der eine Vielzahl von Worten enthält, nämlich eins für jeden möglichen Charakteristikwert, in dem jedes Wort ein einem Charakteristikwert eindeutig zugeordnetes Komponentensignal aufweist und daß das Komponentensignal des adressierten Wortes an den Signalmischer (32) ebenso wie zuvorerwähntes daran zugeführtes anderes Signal angelegt wird.

5. System, wie in Anspruch 4 beansprucht, weiterhin dadurch gekennzeichnet, daß zumindest einige der gespeicherten Charakteristik-Worte außerdem ein Steuer signal enthalten und daß Maßnahmen (70) dafür vorgesehen sind, die den beiden zu mischenden Komponentensignalen zugeordneten Steuersignale zu kombinieren, um ein Bidlaustastsynchron-Signal zu erhalten.

## Revendications

1. Système de génération d'un signal vidéo composite capable de commander un dispositif d'affichage pour afficher une image composite comprenant une pluralité d'éléments d'image et corresponding á deux sources d'image sélectivement superposées comprenant des nombres similaires d'éléments d'image, ledit système comprenant des moyens (10, 14) pour générer deux signaux d'entrée vidéo représentant les deux sources d'image et des moyens pour dériver le signal composite des deux signaux d'entrée, lesdits moyens de dérivation comprenant des moyens de mélange de signaux (32) pouvant fonctionner sous la commande de signaux de commande appliqués pour combiner des signaux qui leur sont délivrés en accord avec le signal de commande courant et des moyens pour générer des signaux de commande en accord avec les valeurs successives courantes d'au moins un premier des signaux d'entrée, caractérisé en ce que ledit premier signal d'entrée comprend une séquence de valeurs numériques représentant respectivement les niveaux d'échelle de gris des éléments d'image successifs de l'une des sources d'images, en ce que les valeurs de la séquence de valeurs numériques sont utilisées successivement pour adresser une mémoire adressable (62) contenant de multiples mots, un pour chaque valeur possible d'échelle de gris, chaque mot comprenant un signal de commande et un signal de composant prédéterminés et étant associé exclusivement à une valeur de niveau de gris, en ce que le signal de commande et le signal de composant du mot adressé sont simultanément délivrés aux moyens de mélange sous la forme du signal de commande courant et de l'un des signaux à combiner, et en ce que l'autre signal délivré aux moyens de mélange (32) comprend une séquence synchrone de valeurs numériques représentant respectivement des caractéristiques des éléments d'image correspondants de l'autre source d'image selon un codage prédéterminé.

2. Système selon la revendication 1 caractérisé en outre en ce que chaque signal de composant comprend un signal vidéo couleur numérique par lequel un pseudo affichage couleur est obtenu.

3. Système selon la revendication 1 ou 2 caractérisé en outre en ce que ledit premier signal d'entrée est dérivé de la sortie de luminance analogique d'une caméra de télévision par un circuit de conversion numérique capable de former les valeurs discrètes de code de gris.

4. Système selon la revendication 1, 2 ou 3 caractérisé en outre en ce que l'autre signal d'entrée comprend une deuxième séquence de valeurs numériques représentant respectivement des caractéristiques des éléments d'image de l'autre source d'image lesquelles valeurs de la deuxième séquence de valeurs numériques sont utilisées successivement pour adresser la mémoire adressable (24) contenant de multiples mots, un pour chaque valeur possible de la caractéristique, chaque mot comprenant un signal de composant associé exclusivement à une valeur caractéristique, et le signal de composant du mot adressé étant délivré aux moyens de mélange (32) comme l'autre signal indiqué précédemment.

5. Système selon la revendication 4 caractérisé en outre en ce qu'au moins certains des mots caractéristiques emmagasinés comprennent également un signal de commande et en ce que des moyens (20) sont prévus pour combiner les signaux de commande associés aux deux signaux de composant à mélanger pour fournir un signal de commande composite.

FIG.1

FIG. 2

# FIG. 3

**A**

PURE COLOUR A

PURE COLOUR B

**B**

PURE COLOUR A

PURE COLOUR C

PURE COLOUR D

PURE COLOUR B

**C**

PURE COLOUR B

BLOCKING

MIXING

MIXED COLOURS (A & B)

PURE COLOUR A

**D**

ADDED COLOURS (A & B)

PURE COLOUR A

ADDING

PURE COLOUR B

BLOCKING

SUBTRACTING

SUBTRACT COLOURS (B-A)

0 002 365